# EUROPEAN PATENT SPECIFICATION

(11) **EP 3 339 251 B1**
(45) Date of publication and mention of the grant of the patent: **11.09.2019**
(21) Application number: 17020592.6
(22) Date of filing: 22.12.2017
(51) Int. Cl.: C02F 1/52, C02F 1/66, C02F 101/00, C02F 103/34

(54) **PROCESS FOR TREATMENT AND RECOVERY OF WASTE WATER FROM EXPLOSIVE INDUSTRIES**
VERFAHREN ZUR BEHANDLUNG UND RÜCKGEWINNUNG VON ABWASSER AUS EXPLOSIONSGEFÄHRDETEN INDUSTRIEN
PROCÉDÉ DE TRAITEMENT ET DE RÉCUPÉRATION D'EAUX USÉES À PARTIR D'INDUSTRIES D'EXPLOSIFS

(30) Priority: 22.12.2016 PT 109803
(43) Date of publication of application: 27.06.2018
(73) Proprietor: Instituto Politécnico de Beja, 7800-295 Beja (PT)
(72) Inventor: Nunes De Carvalho, Maria Fátima, 7800-295 Beja (PT); Araújo Almeida, Maria Adelaide, 7800-295 Beja (PT); Da Cruz Godinho Ribau Teixeira, Maria Margarida, 8005-139 Faro (PT); Da Silva Prazeres, Ana Rita, 7800-631 Cabeça-Gorda (PT); Chaves, Humberto Manuel Indio Tomás, 7800-295 Beja (PT); Simão Madeira, Luis Miguel, 8000-318 Faro (PT)
(74) Representative: Oliveira Lourenço, Nuno Miguel

(56) References cited:
- JP-A- S61 222 585
- JP-A- S61 257 292
- US-A- 6 127 591
- US-A1- 2003 175 942

## Description

### Technical domain

The present invention relates to a process for treatment of waste water from explosive industries, namely of ammonium nitrate / fuel oil (ANFO) type and emulsion type explosives.

Said process comprises precipitation with hydrated lime and carbonation with atmospheric CO₂.

This treatment reduces the organic content of the effluent from the explosives industry and simultaneously produces value-added by-products.

In addition, the process of the present invention enables the capture and collection of compounds present in the obtained effluent and their subsequent reuse, either in the explosives industry or in other industries where they are required.

Thus, the present invention lays in the technical field of waste water treatment, specifically of effluents from the explosives industry.

### Background

In the literature, information on the treatment of waste water from the manufacture of explosives, such as ANFO and emulsion explosives, is very scarce, but some information on the management of these effluents can still be found in the EIA (Environmental Impact Assessment) reports related to the deployment (or expansion) of industries that produce these explosives. Some related documents are JP S61 257292 A, JP S61 222585 A, US 2003/175942 A1, US 6 127 591 A.

In contrast, over the years, there has been extensive research on the feasibility of various technologies in the treatment of effluents generated during the manufacture of explosives such as TNT, RDX and HMX. These effluents contain toxic organic compounds, potentially carcinogenic, found in many contaminated sites and are considered of high potential impact. Preventive measures are a priority in the management of ANFO and emulsion explosives effluents since they are designed to reuse the treated or untreated effluent, wherever possible, within manufacturing processes. These measures include, for example, process water for the manufacture of ammonium nitrate, dilution of the ammonium nitrate solution, heating and cooling or floor washing.

If it is not possible to reuse these effluents, industries usually choose to dispose of the effluent by: (i) transferring these effluents to official waste management operators, which is a high cost for industry; (ii) discharge into evaporation ponds (after passage through an oil and water separation unit) [4-6], which increases the risk of air contamination (by ammonia) and groundwater, and their effectiveness dependent on climate and the need for large areas of soil [7]; and (iii) discharges into rivers [2] or into the sea [4], which are not valid options nowadays due to the very negative impacts on these aquatic resources.

Thus, there is an urgent need to find and implement better alternatives to the treatment and / or elimination of ANFO and emulsion effluents. These alternatives should be technically feasible, low cost, with low environmental impact and, if possible, consider ways of reusing them in the manufacture of explosives or other marketable products.

The present invention proposes to solve this problem by developing a waste water treatment process from the ANFO-type explosives industry and from emulsion explosives through an integrated solution comprising lime precipitation and atmospheric CO₂ carbonation. This treatment reduces the organic content of the effluents and simultaneously produces by-products with added value.

### Summary

The present invention relates to a process for treatment of waste water from explosive industries, such as of ammonium nitrate / fuel oil (ANFO) type and emulsion explosives, by a process comprising precipitation with lime and carbonation with Atmospheric CO₂ according to claim 1.

A single-step precipitation with excess hydrated lime and carbonation with atmospheric CO₂ yields an instant and intense precipitate followed by a sweeping phenomenon, and thus with dispenses of the flocculation step.

Thus, the process of the present invention has, in relation to the others of the prior art, the following advantages:
- It uses only one reagent, low cost, and requires low energy consumption;
- Requires low skilled workforce;
- Easy maintenance;
- Is adaptable to variations in flow rate and concentration, thus allowing the effluents from these industries to be valued at the production site;
- Allows its implementation in small and large volumes of residual water at room temperature;
- Implements an innovative eco technology, which allows the industry to adapt to the concept of circular economy by the production of by-products with commercial value;
- Allows the daily valorisation of effluents, thus preventing the storage and development of bad smells and consequently the protection of public health

### Description of the figures

**Figure 1** - Scheme of the general process of the invention wherein:
   A - Represents hydrated lime [Ca(OH)₂]
   B - Represents wastewater resulting from the manufacture of explosives
   C - Supernatant
   D - Precipitate or sludge
**Figure 2** - Removal efficiency of electrical conductivity and values obtained of pH, in function of the dose of hydrated lime solution applied. It presents the effect of the different doses of hydrated lime used in the values of pH and conductivity.
**Figure 3** - Evolution of calcium, magnesium and alkalinities, and the ability of some compounds to precipitate, in function of the dose of hydrated lime solution applied. It presents:
   A) concentration of magnesium and calcium;
   B) concentration of hydroxides, carbonates and bicarbonates;
   C) tendency of some substances to precipitate considering the theoretical values of the solubility product; theoretical (log(Ks)> log(Ks), means that precipitation occurred, log(Ks) <log (Ks) theoretical, means that precipitation does not occur; and
   D) total alkalinity and phenolphthalein alkalinity, as a function of the dose of hydrated lime.

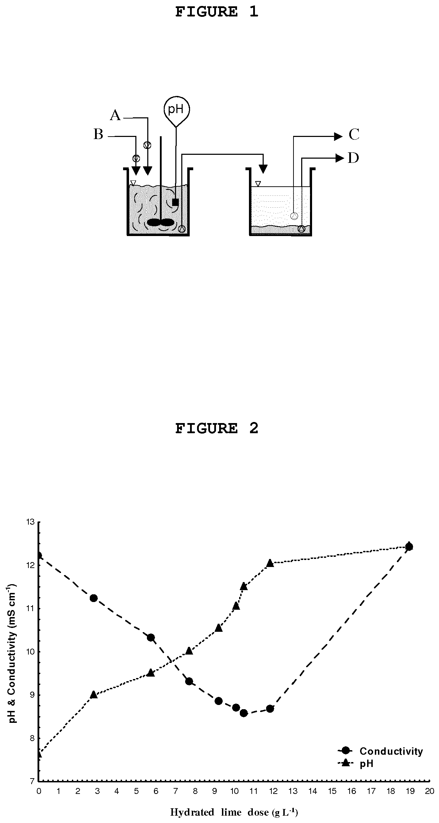

   Figure 2C) for a dose of 9,26 g L⁻¹, values of Log (KS) for Mg(OH)₂ and MgCO₃ are not represented due to Ks = 0.

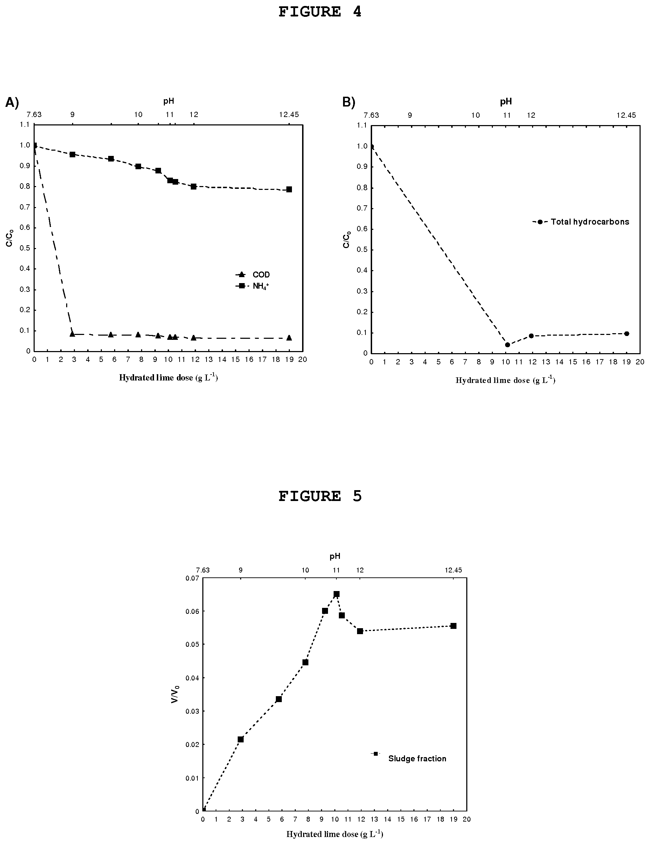

**Figure 4****.** Effect of the hydrated lime dose on:
   A - C/C₀ ratio for COD and ammonium ion
   B - C/C₀ ratio for total hydrocarbons.
**Figure 5****.** Effect of hydrated lime dose on the volume fraction of precipitate formed (V/V₀), wherein V represents the sludge volume after approximately 45 min of sedimentation time and V₀ represents the initial sludge volume (1L).

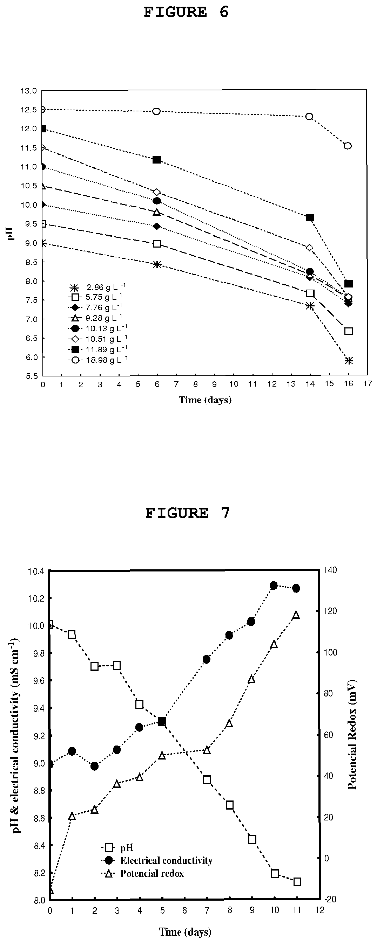

**Figure 6****.** Evolution of pH of the supernatant under atmospheric CO₂ carbonation, and different hydrated lime doses applied, wherein for the period 0 to 14 days remained sludge, and after this period they have been removed.
**Figure 7****.** Evolution of pH, electrical conductivity and redox potential of the supernatant (EW treated with 7.76 g L⁻¹ of hydrated lime), during 11 days of atmospheric CO₂ carbonation.

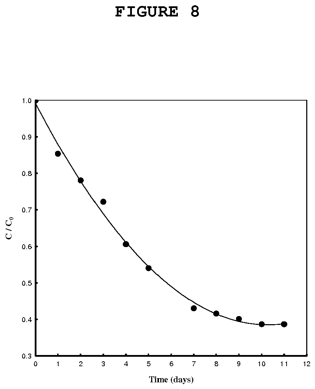

**Figure 8****.** Evolution of the ammonium ion C/C₀ ratio with 11 days of atmospheric CO₂ carbonation (where C and C₀ represent the final concentration and the initial concentration of ammonium ion, respectively).

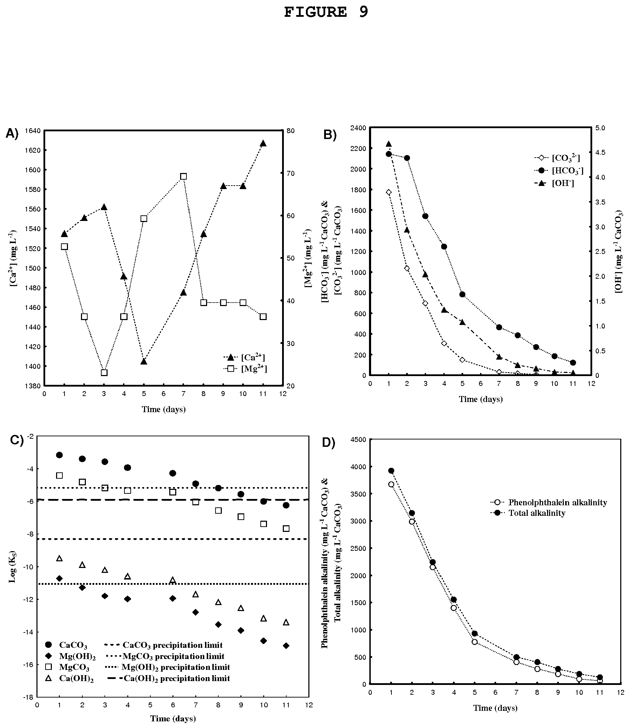

**Figure 9****.** Evolution of:
   A) magnesium and calcium concentration;
   B) hydroxides, carbonates and bicarbonates concentration;
   C) tendency of some substances to precipitate considering the theoretical values of the product of solubility (log (Ks) > log (Ks) _{theoretical}, means there is precipitation, log (Ks) < log (Ks) _{theoretical}, means there is not precipitation); and
   D) total alkalinity and phenolphthalein alkalinity, as a function of time of atmospheric CO₂ carbonation.

### General description

The present invention relates to a process for treatment of waste water from the explosive industries, such as of ammonium nitrate / fuel oil (ANFO) type and emulsion explosives, using single stage chemical precipitation with hydrated lime, and atmospheric exposure at room temperature (Figure 1).

The single step of chemical precipitation is conducted using a proportion of about 1 to 20 g of hydrated lime (A) for each litre of explosive waste water (B), preferably about 5 to 10 g of hydrated lime (A) for each litre of explosive waste water (B), more preferably 6 to 8g hydrated lime (A) for each litre of explosive waste water (B).

The hydrated lime (A) is added to the residual water of explosives (B) under agitation, preferably under vigorous stirring, of 300 to 400 rpm until the resulting solution reaches an alkaline pH of 9 to 12.5.

Then the solution resulting from the precipitation step, as described above, containing the treated waste water or supernatant (C), with or without the precipitate (D), is transferred to an open vessel, preferably with a volume / area ratio in the range from 0.26 m3.m-2 to 0.37 m3.m-2 of surface area, with exposure to the atmosphere, to carry out the carbonation step with atmospheric CO₂ and removal of the contaminants present in that solution, in particular the organic load.

The atmospheric carbonation step lasts for about 20 days, preferably 5 to 15 days, more preferably 10 to 12 days.

At the end of the process of the present invention, i.e., the completion of the precipitation and carbonation steps, a low organic content effluent composed of a nutrient solution and precipitated sludge are obtained.

The solution, rich in nitrate, calcium and ammonium ions, is stable, with a pH of 8.1 near neutral, which gives this supernatant the potential to be used as fertilizer in agriculture, for example in fertigation, in hydroponic systems, etc.

The sludge thus produced has a calorific potential and can be used and/or can be processed through a calcination process for recovery of lime and reuse of this compound in both the explosives industry and other industries where required.

### 1. Characterization of waste water to be treated

Waste water from the ANFO and emulsion industry is collected. The waste water is the result of the mixing of effluents from equipment and floor washing operations and auto-tanks washing, and are then subjected to a residual emulsion breaking pretreatment by the addition of a detergent liquid which results in the separation of oil from the liquid phase.

Visually, the effluents obtained appear as a homogeneous, turbid and whitish mixture, with a combustible odour, due to one of the raw materials used in the formation of ANFO and emulsion explosives.

These waste waters are characterized by having a pH close to neutrality (pH 7.63 ± 0.11), high organic load, (COD 5922 ± 1711 mg/L O₂), very low biodegradability index (BOD₅/COD =0.009 ± 0.006), as well as high concentration of ammonium (1553.9 ± 23.1 mg/L N-NH₄⁺) and nitrates (7233 ± 47 mg/L). The high concentrations of nitrate and ammonium are characteristic of this type of effluent because they are part of the main raw materials used in the manufacture of explosives.

The redox potential is typically positive, which indicates that the effluent presents an oxidative environment. Its conductivity also demonstrates that is an effluent with a high mineralization.

These effluents also present a considerable amount of organic nitrogenous matter and an insignificant nitrite concentration. The values of total suspended solids, oils and fats and total hydrocarbons are approximately of 126, 285.3 and 46.0 mg L⁻¹, respectively. In addition, these effluents have a high degree of total hardness. Average characteristics of some waste waters from the explosive industries can be seen in Table 1 below.

**Table 1. Characteristics of waste waters**

| **Parameters** | **Unit** | **Average ± st.deviation** |
|---|---|---|
| **COD** | mg O₂ L⁻¹ | 5922 ± 1711 |
| **BOD₅** | mg O₂ L⁻¹ | 50 ± 34 |
| **BOD₅ / COD** | - | 0.009 ± 0.006 |
| **TSS** | mg L⁻¹ | 126 ± 3 |
| **Ammonium nitrogen** | mg N-NH₄⁺ L⁻¹ | 1553.9 ± 23.1 |
| **pH** | Sorensen | 7.63 ± 0.11 |
| **Redox Potential** | mV | 114.7 ± 74.3 |
| **Conductivity** | mS cm⁻¹ | 12.21 ± 0.11 |
| **Nitrates** | mg L⁻¹ | 7233 ± 47 |
| **Nitrites** | mg N L⁻¹ | 10.96 ± 0.13 |
| **Chlorides** | mg L⁻¹ | 290.0 ± 4.7 |
| **Dissolved oxygen** | mg O₂ L⁻¹ | 6.505 ± 0.054 |
| **Calcium hardness** | mg L⁻¹ CaCO₃ | 203.4 |
| **Calcium** | mg L⁻¹ | 81.4 |
| **Total hardness** | mg L⁻¹ CaCO₃ | 406.8 |
| **Magnesium hardness** | mg L⁻¹ CaCO₃ | 203.4 |
| **Magnesium** | mg L⁻¹ | 49.4 |
| **Phenolphthalein alkalinity** | mg L⁻¹ CaCO₃ | 47 |
| **Total alkalinity** | mg L⁻¹ CaCO₃ | 560 |
| **Kjeldahl-N** | mg N-Kj. L⁻¹ | 1897.4 ± 0.0 |
| **Organic-N** | mg N. L⁻¹ | 343.5 ± 23.1 |
| **Oils and fats** | mg L⁻¹ | 285.3 |
| **Total hydrocarbons** | mg L⁻¹ | 46.0 |
| **Cadmium** | mg Cd L⁻¹ | < 0.02 |
| **Manganese** | mg Mn L⁻¹ | 0.504 |
| **Bicarbonate** | mg L⁻¹ CaCO₃ | 558.2 |
| **Carbonate** | mg L⁻¹ CaCO₃ | 2.2 |

### 2. Process of treatment of waste waters

The method of treatment herein proposed comprises a single stage chemical precipitation step (a) in which a solution of hydrated lime is added to the effluent while stirring until a pH between 9.5 and 12 is reached, followed by a step (b) exposure to air in the presence of the precipitate, to carry out spontaneous reactions of carbonation with the atmospheric CO₂ and simultaneous removal of the ammonia.

Accordingly, the process for the treatment of waste water from ammonium nitrate / fuel oil type (ANFO) and emulsion type explosive industries according to the present invention is characterized in that it comprises the following steps:
a) Chemical precipitation with the addition of hydrated lime (A) to the waste water to be treated (B) in a proportion ranging from 1 to 20 g of hydrated lime (A) to each litre of waste water (B), with stirring until the solution reaches a alkaline pH value from 9 to 12.5; and
b) Carbonation with atmospheric CO₂ by exposure to the atmosphere of the supernatant (C) in the presence or absence of the precipitate (B), obtained in step (a), for up to about 20 days.

In a preferred embodiment of the process, the carbonation step (b) is performed by exposing to the atmosphere the supernatant (C) in the presence of the precipitate (B) obtained in step (a), i.e. the supernatant (C) together with the precipitate (D).

In a preferred embodiment of the process of the invention, the precipitation step (a) is carried out by adding 5 to 10 g of hydrated lime (A) to each litre of explosive waste water (B).

In another more preferred embodiment of the process, step (a) of precipitation is performed with the addition of 6 to 8 g hydrated lime (A) for each litre of explosive waste water (B).

In another preferred embodiment of the process of the invention, step (a) of precipitation is performed under vigorous stirring of 300 to 400 rpm.

In another preferred embodiment of the process of the invention, the atmospheric carbonation step (b) is performed in an open vessel having a volume / area ratio in the range of 0.26 m³·m⁻² to 0.37 m³·m⁻² of surface area.

In yet another preferred embodiment of the process of the invention, atmospheric carbonation step (b) occurs for 5 to 15 days, more preferably 10 to 12 days.

### 3. Analytical methods

pH and redox potential measurements were performed with a WTW InoLab apparatus.

Electrical conductivity was evaluated in a Jenway 4510 meter.

Chemical oxygen demand (COD) was quantified by measurement in an Ultrospec 2000 spectrophotometer according to the standard reflux method closed with dichromate [8].

Total suspended solids (TSS), biological oxygen demand (BOD) and chloride were determined by gravimetric, respirometric and Mohr methods, respectively [8].

The oil and fats (fat fraction) were measured gravimetrically after extraction in a Soxhlet apparatus [9].

Nitrate was determined by the sodium salicylate method [10]. The ammonium nitrogen was measured by the distillation method in a BUCHI Distillation Unit B-316 and then by titration [8]. Kjeldahl nitrogen was determined by the Kjeldahl method [8]. Nitrites and dissolved oxygen were determined by colorimetry and modifications in the Winkler methods, respectively [8].

Calcium and magnesium determinations were made by volumetric complexation with EDTA using eriochrome black T (calcium + magnesium) and calcon (calcium) indicators [8].

Phenolphthalein alkalinity and total alkalinity were measured by neutralization titration [8].

Heavy metals were determined by flame atomic absorption spectrometry [8].

Total hydrocarbons were measured by infrared spectrophotometry. Langelier Index was determined by saturation index [8].

Bicarbonate, carbonate and hydroxide were determined using "Calculation from equilibrium equations" model [11]. This model is based on the ionic balance for the alkalinity equation, so pH, temperature, total alkalinity and conductivity were measured [11].

### 4. Characterization of the obtained effluents

This process allows the reduction of organic load, turbidity, total suspended solids, oils and fats, hydrocarbons and nitrogen Kjeldhal. If performed in a controlled atmosphere it also allows the recovery of the ammonia. The final treatment effluent rich in nitrate can be reused as a nutrient solution.

Table 2 summarizes the main characteristics of the effluents obtained from the application of the process of the present invention in the treatment of waste water from the explosives industry.

As shown in Table 2, the pH is slightly alkaline at 8.13. In relation to the redox potential, this is positive with a value of +118.5 mV, which indicates that the effluent presents an oxidative environment. The obtained electrical conductivity was 10.27 mS cm⁻¹, which is considered to be still an effluent with a high mineralization (> 800 µS cm⁻¹). The nitrogen has high concentrations of ammonium nitrogen, of the order 577.9 mg N-NH₄⁺ L⁻¹.

From the point of view of removals, the basic chemical precipitation and the carbonation process (11 days) together afforded a 62% ammonia nitrogen removal.

In relation to the Langelier index, taking into account the mean value obtained (-0.02) and the standard deviation (0.04), it can be said that the effluent after 11 days of carbonation is in equilibrium, without a tendency to precipitate or corrode.

**Table 2. Characterization of the obtained effluents.**

| **Parameters** | **Unit** | **Average ± st.deviation** |
|---|---|---|
| **Nitrates** | mg L⁻¹ | 7430 ± 152 |
| **Ammonium nitrogen** | mg N-NH₄ L⁻¹ | 577.9 ± 18.9 |
| **pH** | Sorensen | 8.13 ± 0.02 |
| **Redox Potential** | mV | 118.5 ± 0.8 |
| **Electrical conductivity** | mS cm⁻¹ | 10.27 ± 0.10 |
| **Calcium hardness** | mg L⁻¹ CaCO₃ | 4068.1 ± 40.7 |
| **Calcium** | mg L⁻¹ | 1627.2 ± 16.3 |
| **Total hardness** | mg L⁻¹ CaCO₃ | 4217.2 ± 23.5 |
| **Magnesium hardness** | mg L⁻¹ CaCO₃ | 149.2 ± 47.0 |
| **Magnesium** | mg.L⁻¹ | 36.2 ± 11.4 |
| **Phenolph.alkalinity** | mg L⁻¹ CaCO₃ | 62 ± 27 |
| **Total alkalinity** | mg L⁻¹ CaCO₃ | 125 ± 54 |
| **Bicarbonate** | mg L⁻¹ CaCO₃ | 123± 53 |
| **Carbonate** | mg L⁻¹ CaCO₃ | 1.4± 0.7 |
| **Hydroxides** | mg L⁻¹ CaCO₃ | 5E-02± 2E-03 |
| **Temperature** | (°C) | 21.0 ± 0.0 |
| **Langelier Index** | | -0.02 ± 0.04 |

### 4.1 Effect of hydrated lime dose on the pH and conductivity of the effluent

Figure 2 shows the effect of the different doses of hydrated lime used in pH and conductivity values.

Results show that the pH increases with the added hydrated lime dose, but that this increase is not proportional to the applied dose. In addition, it can be seen that a minimal difference in the dose of hydrated lime applied can cause a significant increase in pH values.

It is known that the conversion of ammonium ion (NH₄⁺) into ammonia (NH₃) involves the consumption of OH- ions, according to:

NH_{3 (g)} + H₂O ₍ₗ₎ ↔ NH₄⁺ _{(aq)} + OH⁻ _{(aq)}

pKₐ = 9.25 (25°C) (1)

Thus, the higher the concentration of ammonium ions in the waste water to be treated, the higher the dose of hydrated lime to be added.

Reduction of conductivity is due to the chemical precipitation of organic and inorganic salts. However, to obtain a clean effluent, a lower lime dose is required, i.e. 7.76 g L⁻¹ (pH = 10), corresponding to 23.8% of the conductivity removal. With increasing doses of hydrated lime the conductivity value starts to increase, which indicates that there is an increase in the concentration of salts.

### 4.2 Effect of hydrated lime on the Ca²⁺, Mg²⁺ and alkalinities

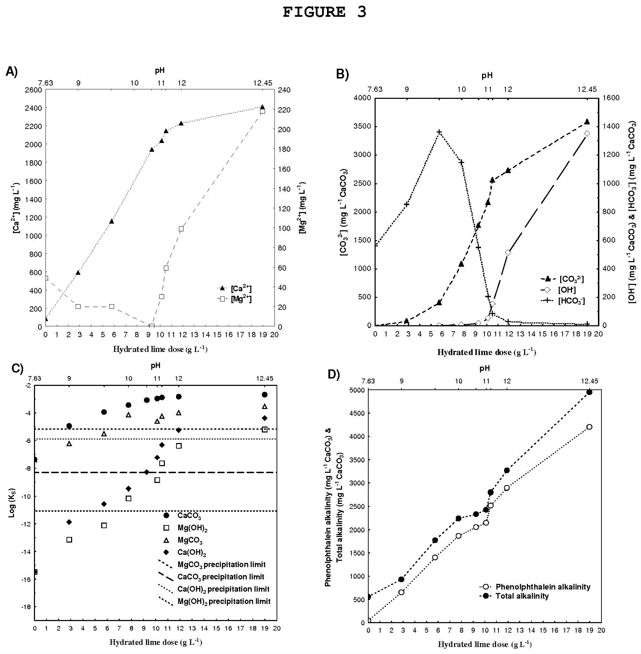

Figure 3 shows the variation of: A) concentrations of calcium and magnesium, B) alkalinity (carbonates, bicarbonates and hydroxides), C) phenolphthalein and total alkalinity, and D) tendency of some substances to precipitate as a function of hydrated lime dose applied.

Concentration of calcium increases with the addition of doses of hydrated lime and the concentration of magnesium decreases to about 9.00 g of L⁻¹ of added lime, from which it begins to increase (Figure 3A).

Looking at the variations of conductivity (Figure 2) and Mg (Figure 3A) with the dose of hydrated lime applied, both decrease to a certain level and then both increase.

After the addition of about 20 g/L of hydrated lime, conductivity has the same value as in untreated water, but the Mg concentration is of approximately 220 mg L⁻¹ due to the addition of hydrated lime. This may be due to the fact that the hydrated lime used is not pure - the compounds which initially tend to precipitate, in the form of hydroxides and/or carbonates, remain in solution as they add more hydrated lime.

Data of Figures 3A and 3B show that high concentrations of calcium, magnesium and carbonates do not result in the precipitation of calcium and magnesium carbonate nor the creation of a limiting reagent in the chemical precipitation process.

In addition, as can be seen in Figure 3D, the tendency for precipitation of calcium carbonate and magnesium carbonate is explicit, since the product of the concentrations of these ions exceeds the solubility product of calcium and magnesium carbonate.

These contradictory results can be explained by the presence of some substances (such as ammonium, sodium and potassium) in the effluents, or hydrated lime which, in the presence of carbonates, form soluble compounds without precipitation, thereby maintaining calcium and magnesium in solution. However, if the pH of the effluent exceeds 10.5, most of the ammonium nitrogen is in the form of ammonia, so it does not react with the carbonates.

Furthermore, the high concentrations of nitrate present in the effluents are neutralizing calcium to form calcium nitrate, which is a compound soluble in water, resulting in high concentrations of calcium and carbonates in the supernatant. The obtained effluents contain high concentration of ammonium ions and the chemical precipitation with hydrated lime converts it to ammonia to a pH higher than 9.2.

Figure 3C shows that the higher the dose of hydrated lime applied, the higher the phenolphthalein alkalinity and total alkalinity. Thus, if the pre-treated water requires a lower pH then it is necessary to add more acid to a higher dose of hydrated lime and vice versa.

### 4.3 Effect of hydrated lime dose on the removal of organic matter, hydrocarbons and nitrogen compounds

Removal of organic matter is obtained up to about 92% (Figure 4A). Removal of organic matter is mainly related to the formation and sedimentation of calcium carbonate during the precipitation process. In fact, when the hydrated lime is added in excess to the effluent, the precipitation of calcium carbonate and magnesium hydroxide occurs according to the following reactions (which may occur simultaneously):

Ca(OH)₂ + H₂CO₃ ↔ CaCO₃ (s) + 2H₂O (2)

Ca(OH)₂ + Ca(HCO₃)₂ ↔ 2CaCO₃ (s) + 2H₂O (3)

Ca(OH)₂ + Mg(HCO₃)₂ ↔ MgCO₃ + CaCO₃ (s) + 2H₂O (4)

Ca(OH)₂ + MgCO₃ ↔ Mg(OH)₂ (s) + CaCO₃ (s) (5)

Calcium carbonate acts as a coagulating agent, causing entrainment of the organic matter. This phenomenon has been called a "sweeping effect" and occurs when an appreciable amount of hydrated lime is added.

During this process, contaminants (dissolved or suspended, e.g. heavy metals, hydrocarbons, oils and fats and other organic substances) are drawn from the solution due to the sedimentation of the agglomerated particles. These particles, with fixed positions in relation to each other, have a considerable weight, therefore sedimentation occurs. Accordingly, a liquid-solid interface is formed, which results in a clarified supernatant (without the flocculation step) and consolidated sludge.

The effect of hydrated lime dose on the removal of biodegradable organic matter (quantified by determination of BOD₅) was also studied. The results show a removal of about 100% of BOD₅ for all doses of lime tested. The removals of ammonium nitrogen vary from 5 to 21% as a function of the dose of hydrated lime applied (Figure 4A). It is generally found that the higher the pH, the greater the removal of ammonium nitrogen.

It is believed that the main mechanism of ammonia nitrogen removal in lime precipitation process is volatilization, since, unlike the ammonium ion, the ammonia can be volatilized.

As the dose of hydrated lime applied increases, there is an increase in the pH of the waste water, which moves the chemical equilibrium (Eq. 1) to convert the ammonium ions to ammonia and, when the pH value is above 10.5 -11.5 most of the ammonium nitrogen is present as ammonia gas.

Thus, for 10.13 g L⁻¹ of added hydrated lime dose (pH = 11), virtually all of the ammonium nitrogen (about 98%) is present as a dissolved gas (NH₃ solved in liquid), so that the volatilization of the ammonia present in the waste water can be facilitated.

Therefore, it is very important that the process of the present invention can be coupled to a generated ammonia capture and collection system, not only enabling it to be recovered and reused, but also in the explosives industry or other relevant industries, since the ammonia is one of the ingredients used, but also to prevent air pollution.

Thus, for a dose of 7.76 g L⁻¹ added lime, no nitrate removal is observed and removal of organic nitrogen is about 100%.

The present method of treatment proved to be ineffective in removing nitrates, and it is assumed that the same is true for other doses of lime. Currently, the main technologies that remove high concentrations of nitrates (as is the present case) are biological denitrification, ion exchange or reverse osmosis.

Figure 4B) shows that the doses of 10.13, 11.89 and 18.98 gL⁻¹ of hydrated lime result in total hydrocarbon uptakes of 96, 91 and 90%, respectively. These values are within the observed removals for removals of organic matter (92 to 94%), since the hydrocarbons are part of the organic matter.

### 4.4 Effect of hydrated lime dose on the sludge volume

The process of the present invention results in the formation of sludge and its supernatants - "mantle" sedimentation.

Figure 5 shows that the sludge fraction formed (after about 45 minutes of sedimentation) varies linearly (r² = 0.9864) with the dose of hydrated lime applied to a value of about 10 gL⁻¹ of lime. From this point, the fraction of sludge formed decreases. It is thought that this decrease is due to the compression that occurs in the first sediment sludge, possibly caused by the increase in weight of the last sludge. The production of small volumes of sludge causes less impact on the environment during its disposal / recovery and vice versa.

The sludge formed is quite rich in calcium. Thus, there is a possibility of recovering the calcium from precipitate by means of a calcination process which allows their reuse both in the process of the present invention and in other relevant processes.

Additionally, the sludge may have a high calorific potential, since the hydrocarbons were removed from the supernatant.

The selection of the optimum dose of hydrated lime to be added is based on sludge production, as well as the quality and characteristics of the supernatant, which may contribute to the success of the next treatment (removal of ammonia), such as pH values.

Thus, an optimum dose of hydrated lime of about 7.76 g L⁻¹ was chosen. This dose produces a supernatant with pH = 10 (allowing the conversion of most of the ammonium ion into ammonia (pH> 9.2) and consequently its volatilization), as well as 98.2% removals for oils and fats, 100 % for organic nitrogen, 92.1% for organic matter (COD), 10.2% for ammonium ions and 0% for nitrates.

### 4.5 Carbonation with CO₂ atmospheric

The influence of the sludge obtained on the supernatant during the carbonation phase was analysed (Figure 6).

A decrease in pH values over time was observed for all doses of hydrated lime applied (Figure 6A). In fact, atmospheric neutralization with CO₂ also occurs naturally in the oceans, since the CO₂ from the combustion of fossil fuels is absorbed by the oceans with the consequent increase of their acidity.

The results also show that when the supernatant is in contact with the sludge (i.e., between day 0 and day 14), the decrease in pH value is slower than when the supernatant is not in contact with the sludge (i.e. between day 14 and day 16).

Therefore, maintaining the sludge with the supernatant may represent an additional advantage in the process of the present invention, as it avoids a sudden drop in pH and, consequently, a greater likelihood of the ammonium nitrogen remaining in the ammonia form for a longer time, so that the ammonia can be volatilized, and then captured, by a separation process, and can thus be reused.

Carbonation phase with separation of the sludge requires the addition of higher doses of hydrated lime in order to maintain the high pH over the time required to remove the ammonia.

Thus, in addition to the interaction between the supernatant and the atmosphere, there is also a chemical balance between the supernatant and the sludge that slows down the pH value. However, when separation takes place, the supernatant is not only in chemical equilibrium with the atmosphere, but there is also the formation of new sludge (according to Equation 3) and a new chemical equilibrium between the supernatant and the sludge is restored.

However, it is always necessary to collect the produced ammonia because of its negative impact on the environment, whereby the process of the present invention thus provides a further advantage over the prior art.

### Description of a preferred embodiment

In the preferred embodiment of the waste water treatment process from the explosive industries, such as ammonium nitrate / fuel oil (ANFO) type and emulsion explosives of the present invention, a dose of hydrated lime of about (7.76 g L⁻¹) to the waste water during the chemical precipitation phase. Then, during the carbonation phase, which lasted for about 11 days, the supernatant was maintained in contact with the sludge formed during the chemical precipitation phase to promote removal of the ammonium nitrogen.

### 1. Evolution of pH values and conductivity

Figure 7 shows the evolution of pH values, electrical conductivity and redox potential of the supernatant over time. There is a clear decrease in the pH value from 10 to 8.1 during the 11 days that the carbonation phase lasted. This decrease can be explained as follows: the carbonic acid (H₂CO₃) present in the effluent was totally consumed, during the precipitation stage, to produce calcium carbonate (Eq.2), causing a chemical imbalance of CO₂ between the supernatant and atmosphere. As a way of counteracting this imbalance, there is a tendency for the CO₂ present in the atmosphere to dissolve in the water through the water-air interface until it reaches equilibrium (Eq.6). During this phase, CO₂ dissolves in the effluent, combining with water molecules to form carbonic acid (Eq.7), which then decomposes naturally into bicarbonate molecules (Eq.8) and carbonate (Eq.9) producing hydrogen ions (H⁺) and leading to a decrease in the pH value of the supernatant.

CO₂ (g) ↔ CO₂ (aq) (6)

CO₂ (aq) + H₂O (l) ↔ H₂CO₃ (aq) (7)

H₂CO₃ ↔ H⁺ + HCO₃⁻ (8)

HCO₃⁻ ↔ H⁺ + CO₃²⁻ (9)

The electrical conductivity increases with time (11 days), from 9 to 10.3 mS cm⁻¹ (Figure 7). This fact can be related to the evaporation and / or redissolution phenomena of the ions, responsible for the electrical conductivity, of the sludge to the supernatant.

It is also observed that the variation of the electrical conductivity is not related to the variation of the concentration of calcium and magnesium (Figure 9A). An increase in redox potential of -14.8 to 118.5 mV (Figure 7) is also observed, indicating that the supernatant tends to exhibit higher oxidation conditions.

### 2. Evolution of ammonium ion

Figure 8 shows the evolution of the C/Co ratio for the ammonium nitrogen during approximately the 11 days of the carbonation phase. A continuous removal of ammonium ions is observed, reaching a ratio of 0.4 (removal of 61% of ammonium nitrogen) after ten days of operation. The final concentration is 577.9 mg of N-NH₄⁺ L⁻¹.

The decrease of the ammonium nitrogen is higher in the first 6 days, after which it is observed a decrease in the tendency of removal of this ammonium nitrogen, stabilizing on the day 10 day of the process.

This behaviour can be justified by the decrease in pH value (Figure 7), since, on day 7, the pH value is less than 9.25, which causes the system to convert ammonia to ammonium ion, which cannot be volatilize (according to Eq. 1). On day 11, under pH conditions of 8.1 (21°C), the percentage of ammonia is already low (5.5%) compared to the ammonium ion (94.5%).

Thus, in this preferred embodiment of the proposed process, a removal value of the ammonia nitrogen of the order of 62.8% can be obtained. Nitrates were not removed over time, once the redox potential was kept positive and therefore denitrification did not occur.

### 3. Evolution of Ca²⁺, Mg²⁺ and alkalinities

Figures 9 (A) and (B) show the variation of magnesium and calcium concentration and the variation of alkalinity (hydroxide, carbonate and bicarbonate), respectively, over time.

High levels of calcium (from 1405 to 1627 mg L⁻¹) and magnesium (from 23 to 69 mg L⁻¹) are observed in the presence of high carbonate contents. For these concentrations of Ca²⁺ and Mg²⁺ and the solubility of the product, it was expected that precipitation of calcium carbonate (Figure 9 (C)) and the creation of a limiting reagent would occur to the carbonation process. However, this was not observed for reasons already mentioned previously.

The decrease in phenolphthalein alkalinity and total alkalinity over time observed in Figure 9 (D) may be due to the chemical reaction with atmospheric CO₂ and the removal of ammoniacal nitrogen by volatilization. In the process of volatilization, when the ammonia is removed from the supernatant, the system tends to consume OH⁻, to convert the ammonium ion to ammonia, in order to maintain the NH₃/NH₄⁺ chemical equilibrium according to Eq.1.

After performing the process of the invention, the supernatant appears as a nutrient solution. This solution is rich in nitrate, calcium and ammonium ions, stable (i.e. the Langelier index value was about -0.02 ± 0.04, with no tendency to precipitate or corrode), with a pH value of 8.1 near the neutral, which gives to this supernatant the potential to be used as fertilizer in fertirrigation.

Thus, in this preferred embodiment of the process of the invention, for a dose of hydrated lime (7.76 g L⁻¹) added to the waste water, during the chemical precipitation phase, a 92.1% removal was obtained for organic matter, 98.2% for oils and fats and 100% for organic nitrogen.

In addition, a supernatant having a pH value of 10 was obtained, which allowed the conversion of the ammonium ion to ammonia and consequently its easier volatilization.

The results of the carbonation step have shown that when the sludge is used in conjunction with the supernatant the ammonia elimination is more efficient as it avoids a strong decrease in the pH value and therefore the ammoniacal nitrogen is maintained longer in the form of ammonia.

Thus, in the presence of sludge and during 10 days, this process allowed to: i) reduce the pH values from 10 to 8.1 and, consequently, the conversion of carbonates into bicarbonates against carbonate precipitation, ii) the atmospheric mitigation of CO₂, and iii) removal of the ammonium ion in 61% by the volatilization of ammonia.

The process of the present invention produces by-products (supernatant, ammonia and sludge) with strong potential for reuse in industry or agriculture, thus contributing to circular economy. The supernatant is rich in nitrates, ammonium and calcium ions and can therefore be marketed as a nutrient solution for agricultural use (fertigation or hydroponic nutrient solutions) . Ammonia gas can be collected by an ammonia capture system (for example, coupled to the proposed treatment system) and can be used in the explosives manufacturing industries. In addition, the sludge produced has a calorific potential and can be used and/or can be processed through a calcination process for the recovery of lime.

Finally, the proposed process presents a low cost solution, since lime is an inexpensive product, widely used in industry and wastewater treatment, and the carbonation step does not require the addition and maintenance of chemicals besides having a low energy consumption.

### Examples

### Example 1. Chemical precipitation with hydrated lime

The chemical precipitation step was performed using 1000 mL of wastewater, to which were added different doses of hydrated lime (from 0 to 20 g L⁻¹) of the total water value under vigorous agitation (rotation speed of 3). Stirring was continued until the precipitation pH reached was 9 to 12.5. Once this value was reached, the stirring was maintained for 1 minute. After the stirring period, the treated effluent was immediately transferred to a standard glass graduated cylinder (about 1 L and 37 cm in height), and the sludge sedimentation process was started, which lasted for about 45 min. Next, the sedimentation type, the sedimentation volume of the sludge and the physicochemical characteristics of the supernatant were analysed. Figure 2 shows the effect of different doses of hydrated lime used in pH and conductivity values.

The results show that pH value increases with the added hydrated lime dose, but that this increase is not proportional to the applied dose, as can be observed between 3 and 10.5 g L⁻¹ of added hydrated lime. In addition, it can be seen that a minimal difference in the dose of hydrated lime applied can cause a significant increase in pH value.

Conductivity reached a minimum of 8.5 mS cm⁻¹ (corresponding to 29.1% conductivity removal) using 10.5 g L⁻¹ hydrated lime (pH = 11.5, Figure 2).

The reduction of conductivity can be due to the chemical precipitation of organic and inorganic salts. However, to obtain a clean effluent, a lower lime dose is required, i.e. 7.76 g L⁻¹ (pH = 10), corresponding to 23.8% of conductivity removal. From the hydrated lime doses of 10.5 g L⁻¹ to 20 g L⁻¹, the conductivity value starts to increase, indicating that there is an increase in the salt concentration.

### Example 2: Atmospheric carbonation

After the sedimentation operation, as described in the previous section, the atmospheric carbonation process was started, applied to all lime doses and for 16 days. In this process, the supernatant and sludge were kept in the same vessel in contact with atmospheric air, at room temperature for 14 days, without addition of chemicals and without any stirring. After this time, the supernatant was separated from the sludge and exposed to the same conditions for a further 2 days. The respective pH values were determined with the purpose of analysing the influence of the presence of the sludge in the carbonation process.

### Example 3: Treatment of residual waters

The process of treatment, comprising the steps of chemical precipitation and carbonation, were applied to 5L of waste water, as described in the previous examples. Carbonation was carried out in a vessel with about 189 cm² of surface area, the process being monitored over time and its efficiency of removal of measured ammonia, until its total disappearance.

### Example 4: Characterization of the obtained effluent

The waste water from the explosives industry was treated as described in the previous examples. Table 3 summarizes the main characteristics of effluents obtained after treatment of these waters with the process of the present invention.

As shown in Table 3, the pH value is slightly alkaline at 8.13. In relation to the redox potential, this is positive with a value of +118.5 mV, which indicates that the effluent presents an oxidative environment. The electrical conductivity obtained was 10.27 mS cm⁻¹, which is considered to be still an effluent with a high mineralization (> 800 µS cm⁻¹). Nitrogen shows high concentrations of ammoniacal nitrogen, of the order 577.9 mg N-NH₄+L⁻¹.

From the point of view of removals, the basic chemical precipitation together with the carbonation process (11 days) afforded a 62% ammonia nitrogen removal. In relation to the Langelier index, taking into account the mean value obtained (-0.02) and the standard deviation (0.04), it can be said that the effluent after 11 days of carbonation is in equilibrium, without a tendency to precipitate or corrode.

**Table 3. Summary of the main characteristics of the effluents obtained from the application of the process of the present invention**

| **Parameters** | **Unit** | **Average ± st.deviation** |
|---|---|---|
| **Nitrates** | mg L⁻¹ | 7430 ± 152 |
| **Ammoniacal nitrogen** | mg N-NH₄ L⁻¹ | 577.9 ± 18.9 |
| **pH** | Sorensen | 8.13 ± 0.02 |
| **Redox Potential** | mV | 118.5 ± 0.8 |
| **Conductivity** | mS cm⁻¹ | 10.27 ± 0.10 |
| **Calcium hardness** | mg L⁻¹ CaCO₃ | 4068.1 ± 40.7 |
| **Calcium** | mg L⁻¹ | 1627.2 ± 16.3 |
| **Total hardness** | mg L⁻¹ CaCO₃ | 4217.2 ± 23.5 |
| **Magnesium hardness** | mg L⁻¹ CaCO₃ | 149.2 ± 47.0 |
| **Magnesium** | mg L⁻¹ | 36.2 ± 11.4 |
| **Phenolph.alkalinity** | mg L⁻¹ CaCO₃ | 62 ± 27 |
| **Total alkalinity** | mg L⁻¹ CaCO₃ | 125 ± 54 |
| **Bicarbonate** | mg L⁻¹ CaCO₃ | 123± 53 |
| **Carbonate** | mg L⁻¹ CaCO₃ | 1.4± 0.7 |
| **Hydroxides** | mg L⁻¹ CaCO₃ | 5E-02± 2E-03 |
| **Temperature** | (°C) | 21.0 ± 0.0 |
| **Langelier Index** | | -0.02 ± 0.04 |

As shown in Table 3, the pH value of the effluent is neutral (pH = 8.3). The redox potential is positive (+118.5 mV), which indicates that the effluent presents an oxidative environment. Conductivity is 10.27 mS cm⁻¹, so it is an effluent with high mineralization (> 800 µS cm⁻¹).

### 4.1 Effect on the pH and conductivity values

Figure 2 shows the effect of different doses of hydrated lime used on the pH and conductivity values.

The results indicate that the pH increases with the added hydrated lime dose, but that this increase is not proportional to the dose applied, as can be seen between 3 and 10.5 g L⁻¹ of added hydrated lime.

Furthermore, it can be seen that a minimal difference in the dose of hydrated lime applied can cause a significant increase in pH values.

The conductivity reached a minimum of 8.5 mS cm⁻¹ (corresponding to 29.1% conductivity removal) using 10.5 g L⁻¹ hydrated lime (pH = 11.5, Figure 2). The reduction of conductivity can be due to the chemical precipitation of organic and inorganic salts. However, to obtain a clean effluent, a lower lime dose is required, i.e. 7.76 g L⁻¹ (pH = 10), corresponding to 23.8% of the conductivity removal. From the hydrated lime doses of 10.5 g L⁻¹ to 20 g L⁻¹, the conductivity value starts to increase, indicating that there is an increase in the salt concentration.

### 4.2 Effect on the quantity of Ca²⁺, Mg²⁺ and alkalinity

Calcium concentration increases with the addition of doses of hydrated lime and the concentration of magnesium decreases to 9.26 g of added L⁻¹ of lime, from which it begins to increase (Figure 3A).

Looking at the variations of conductivity (Figure 2) and Mg (Figure 3A) with the dose of hydrated lime applied, both decrease to the minimum of 10.5 g L⁻¹ and 9.26 g L⁻¹ of lime added, respectively. Then both increase. After 19 g of L⁻¹ added lime, the conductivity has the same value as in untreated waters (∼12 mS cm ⁻¹), but the Mg concentration is 220 mg L⁻¹ due to the addition of hydrated lime.

This means that the magnesium ion is not only responsible for the increase in conductivity, but due to the existence of other metals (the hydrated lime used was not pure) which initially tend to precipitate in the form of hydroxides and/or carbonates, which remain in solution as you add more hydrated lime.

Data of Figures 3A and 3B show that high calcium concentrations (ranging from 81.4 to 2408.3 mg Ca²⁺ L⁻¹), magnesium (0 to 217.5 mg Mg²⁺ L⁻¹) and carbonates (from 79.6 to 3588.5 mg L⁻¹ CaCO₃) do not result in the precipitation of calcium and magnesium carbonate and the creation of a limiting reagent in the chemical precipitation process.

Furthermore, as can be seen in Figure 3D, the tendency for precipitation of calcium carbonate and magnesium carbonate is clear, since the product of the concentrations of these ions exceeds the solubility product of calcium and magnesium carbonate. However, if the pH value of the effluent exceeds 10.5, most of the ammoniacal nitrogen is in the form of ammonia, so it does not react with the carbonates. The effluents obtained contain high concentration of ammonium ions and the chemical precipitation with hydrated lime converts it to ammonia to a pH value higher than 9.2.

Figure 3C shows that the higher the dose of hydrated lime applied, the higher the phenolphthalein alkalinity and total alkalinity. Thus, if the pre-treated water requires a lower pH then it is necessary to add more acid to a higher dose of hydrated lime and vice versa.

### 4.3 Effect of the hydrated lime dose on the removal of organic matter, hydrocarbons and nitrogen compounds

Removal of organic matter is obtained up to about 92% (Figure 4A). The effect of hydrated lime dose on the removal of biodegradable organic matter (quantified by determination of BOD₅) was also evaluated. The results show a removal of about 100% of BOD₅ for all doses of lime tested.

Removal of ammoniacal nitrogen vary from 5 to 21% as a function of the dose of hydrated lime applied (Figure 4A). It is generally found that the higher the pH, the greater the removal of ammoniacal nitrogen. As the dose of hydrated lime applied increases, there is an increase in the pH value of the waste water, and when the pH value is above 10.5-11.5 most of the ammoniacal nitrogen is present as ammonia gas.

Thus, for 10.13 g L⁻¹ of added hydrated lime dose (pH = 11), virtually all of the ammoniacal nitrogen (about 98%) is present as a dissolved gas (NH₃ solved in liquid). For a dose of 7.76 g L⁻¹ added lime, no nitrate removal is observed and removal of organic nitrogen is about 100%.

Figure 4B) shows that the doses of 10.13, 11.89 and 18.98 g L⁻¹ of hydrated lime result in total hydrocarbon uptakes of 96, 91 and 90%, respectively. These values are within the observed removals for removals of organic matter (92 to 94%), since the hydrocarbons are part of the organic matter.

### 4.4 Effect on the volume of sludge

Figure 5 shows that the sludge fraction formed (after about 45 minutes of sedimentation) varies linearly (r² = 0.9864) with the dose of hydrated lime applied in the range of 2.86 to 10 g L⁻¹, reaching a maximum of 0.07. After the addition of 10 g of L⁻¹ of lime, the fraction of slurry formed decreases to values close to 0.055.

The formed sludge is quite rich in calcium, since the supernatant has low calcium concentrations (between 0.6 and 2.4 g Ca²⁺ L⁻¹, Figure 3A), compared to the calcium present in the doses of hydrated lime (2 to 19 g L⁻¹).

The hydrated lime dose of about 7.76 g L⁻¹ was the one that produced the best effects: supernatant with pH = 10, as well as 98.2% removals for oils and fats, 100% for organic nitrogen, 92.1 % for organic matter (COD), 10.2% for ammonium ions and 0% for nitrates.

### 4.5 Atmospheric CO₂ carbonation

The influence of the presence of the sludge obtained in the chemical precipitation phase on the supernatant during the carbonation phase was analysed, and a decrease in pH over time could be observed for all hydrated lime doses applied (Figure 6A).

When the supernatant is in contact with the sludge (i.e. between day 0 and day 14), the decrease in pH values is slower than when the supernatant is not in contact with the sludge (i.e. between day 14 and day 16). Thus, the carbonation phase with separation of the sludge requires the addition of higher doses of hydrated lime in order to maintain the high pH over the time necessary for the removal of the ammonia.

### Bibliography

[1] UPL (Umwelt Pty Limited) Australia, Environmental Assessment- Proposed Ammonium Nitrate Emulsion Production Facility and Continued Operation of Orica Mining Services Technology Centre, Richmond Vale, NSW, 2009.
[2] AECOM, Proposed Ammonium Nitrate Facility Expansion Greenleaf Road, Kooragang Island, Volume 1 - Main Report, 2009.
[3] Strategen, P. Brinckerhoff, CSBP Kwinana: Ammonium Nitrate Production Expansion Project: Phase 2 Public Environmental Review, 2010.
[4] BNPL (Burrup Nitrates Pty Ltd), Technical Ammonium Nitrate Production Facility-Response to Public Submissions (PER), 2010.
[5] DNG (Dyno Nobel Group), Initial Advice Statement for Moranbah - Ammonium Nitrate Project, 2006.
[6] GHD (GHD Pty Ltd), Supplementary Report for the proposed Moranbah Ammonium Nitrate Project, Responses to issues raised, Dyno Nobel Ammonium Nitrate Plant, 2006.
[7] L. K. Wang, Y. T. Hung, H. H. Lo, C. Yapijakis, Handbook of Industrial and Hazardous Wastes Treatment, 7nd Ed, New York, Marcel Dekker, 2004, 1345pp.
[8] APHA, Standard Methods for the Examination of Water and Wastewater, 22nd Edition, Washington, 2013.
[9] C. N. Sawyer, P. L. McCarty, G. F. Parkin, Chemistry for Environmental Engineering, 4th Ed, McGraw-Hill, Inc., New York, United States, 1994.
[10] J. Rodier, L'analyse de l'eau: eaux naturelles, eaux résiduaires, eau de mer, 8e Ed., Dunod, Paris, 1996, 365p.
[11] C. N. Sawyer, P. L. McCarty, Chemistry for Environmental Engineering, 3th Ed, McGraw - Hill Book Company, 1978.

## Claims

1. Process for treatment of waste water from the ammonium nitrate/fuel oil (ANFO) type and emulsion type explosive industries comprising the following steps:
a) Chemical precipitation with the addition of hydrated lime (A) to the waste water to be treated (B) in a proportion of 1 to 20 g of hydrated lime (A) for each litre of waste water (B), under stirring until the solution reaches a alkaline pH value from 9 to 12.5; and
b) Carbonation with atmospheric CO₂ by exposure of supernatant (C) to the atmosphere, in the absence or presence of precipitate (B) obtained in step (a), for up to about 20 days.

2. Process for treatment of waste water according to claim 1, **characterized in that** step (b) of carbonation with atmospheric CO₂ is performed by exposure of supernatant (C) to the atmosphere, in the presence of precipitate (B) obtained in step (a), for up to about 20 days.

3. Process for treatment of waste water according to any one of claims 1 or 2, **characterized in that** step (a) of precipitation with hydrated lime is performed by addition of 5 to 10 g of hydrated lime (A) for each litre of water of explosives (B).

4. Process for treatment of waste water according to claim 3, **characterized in that** step (a) of precipitation with hydrated lime is performed by addition of 6 to 8 g of hydrated lime (A) for each litre of waste water of explosives (B).

5. Process for treatment of waste water according to any one of the preceding claims, **characterized in that** step (a) of hydrated lime precipitation is performed under stirring conditions of 300 to 400 r.p.m.

6. Process for treatment of waste water according to any one of the preceding claims, **characterized in that** step (b) of carbonation with atmospheric CO₂ is performed in an open container with a volume/area ratio in the range of 0.26 m³·m⁻² a 0.37 m³·m⁻² of surface area.

7. Process for treatment of waste water according to any one of the preceding claims, **characterized in that** step (b) of carbonation with atmospheric CO₂ is performed over a period of 5 to 15 days.

8. Process for treatment of waste water according to claim 7, **characterized in that** step (b) of carbonation with atmospheric CO₂ is performed over a period of 10 to 12 days.

9. Process for treatment of waste water according to any one of the preceding claims, **characterized in that** it further comprises an ammonia capture and collection system for the ammonia generated in the process itself.

## Patentansprüche

1. Verfahren zur Abwasserbehandlung aus den Ammoniumnitrat-Heizöl- (ANFO) und Emulsionssprengstoffindustrien umfassend folgende Schritte:
a) Chemische Kondensierung mit dem Zusatz von Kalkhydrat (A) zum zu behandelnden Abwasser (B) in einem Verhältnis von 1 zu 20 g aus Kalkhydrat (A) pro jedes Abwasserliter (B), unter Mischen bis die Lösung ein Alkali-ph-Wert von 9 zu 12,5 erreicht; und
b) Karbonisierung mit atmosphärischem CO₂ mittels Aussetzung von Überstand (C) in die Atmosphäre, in der Abwesenheit oder Anwesenheit von Kondensierung (B) erhalten in Schritt (a), zu bis zu etwa 20 Tage.

2. Verfahren zur Abwasserbehandlung gemäß Anspruch 1 **dadurch gekennzeichnet, dass** der Schritt (b) der Karbonisierung mit atmosphärischem CO₂ mittels Aussetzung von Überstand (C) in die Atmosphäre, in der Anwesenheit der Kondensierung (B) erhalten in Schritt (a), zu bis zu etwa 20 Tage durchgeführt ist.

3. Verfahren zur Abwasserbehandlung gemäß einer der Ansprüche 1 oder 2 **dadurch gekennzeichnet, dass** der Schritt (a) der Kondensierung mit Kalkhydrat mittels Zusatz von 5 bis 10 g von Kalkhydrat (A) pro Sprengstoffwasserliter durchgeführt ist.

4. Verfahren zur Abwasserbehandlung gemäß Anspruch 3 **dadurch gekennzeichnet, dass** der Schritt (a) der Kondensierung mit Kalkhydrat mittels Zusatz von 6 bis 8 g von Kalkhydrat (A) pro Sprengstoffabwasserliter (B) durchgeführt ist.

5. Verfahren zur Abwasserbehandlung gemäß einer der vorigen Ansprüche **dadurch gekennzeichnet, dass** der Schritt (a) der Kalkhydratkondensierung unter Mischbedingungen von 300 zu 400 r.p.m. durchgeführt ist.

6. Verfahren zur Abwasserbehandlung gemäß einer der vorigen Ansprüche **dadurch gekennzeichnet, dass** der Schritt (b) der Karbonisierung mit atmosphärischem CO₂ in einem offenen Behälter mit einem Volumen- / Umfangverhältnis innerhalb der Oberfläche zwischen 0.26 m³·m⁻² und 0.37 m³·m⁻².

7. Verfahren zur Abwasserbehandlung gemäß einer der vorigen Ansprüche **dadurch gekennzeichnet, dass** der Schritt (b) der Karbonisierung mit atmoshpärischem CO₂ über einen Zeitraum von 5 zu 15 Tage.

8. Verfahren zur Abwasserbehandlung gemäß Anspruch 7 **dadurch gekennzeichnet, dass** der Schritt (b) der Karbonisierung mit atmosphärischem CO₂ über einen Zeitraum von 10 zu 12 Tage durchgeführt ist.

9. Verfahren zur Abwasserbehandlung gemäß einer der vorigen Ansprüche **dadurch gekennzeichnet, dass** es weiterhin ein Ammoniakauffang- und -sammelsystem für das Ammoniak umfasst gebilder im Verfahren selbst.

## Revendications

1. Processus de traitement de l'eau usée des industries explosives de type émulsion et de type nitrate d' ammonium/mazout(UNFO), comprenant les étapes suivantes :
a) Précipitation chimique avec l'ajout de chaux hydratée (A) à l'eau usée à traiter (B) dans une proportion de 1 pour 20 g de chaux hydratées (A) pour chaque litre d'eau usée (B), sous agitation jusqu'à ce que la solution atteigne une valeur pH alcaline de 9 à 12,5 ; et
b) Carbonatation avec du CO₂ atmosphérique par exposition du surnageant (C) à l'atmosphère, en absence ou en présence de précipité (B) obtenu à l'étape (a), jusqu'à près de 20 jours.

2. Processus de traitement de l'eau usée selon la revendication 1, **caractérisée par le fait que** l'étape (b) de la carbonatation avec du CO₂ atmosphérique est réalisée par exposition du surnageant (C) à l'atmosphère, en présence de précipité (B) obtenu à l'étape (a), jusqu'à près 20 jours.

3. Processus de traitement de l'eau usée selon une quelconque revendication 1 ou 2, **caractérisé par le fait que** l'étape (a) de la précipitation avec la chaux hydratée est réalisée en ajoutant 5 à 10 g de chaux hydratée (A) pour chaque litre d'eau d'explosifs (B).

4. Processus de traitement de l'eau usée selon la revendication 3, **caractérisé par le fait que** l'étape (a) de la précipitation avec la chaux hydratée est réalisée en ajoutant 6 à 8 g de chaux hydratée (A) pour chaque litre d'eau usée d'explosifs (B).

5. Processus de traitement de l'eau usée selon une quelconque revendication précédente, **caractérisé par le fait que** l'étape (a) de précipitation de la chaux hydratée est réalisée dans des conditions d'agitations de 300 à 400 r.p.m.

6. Processus de traitement de l'eau usée selon une quelconque revendication précédente, **caractérisé par le fait que** l'étape (b) de la carbonatation avec le CO₂ atmosphérique est réalisée dans un conteneur ouvert avec un rapport volume/surface allant de 0,26 m³·m⁻² à 0,37 m³·m⁻² de surface.

7. Processus de traitement de l'eau usée selon une quelconque revendication précédente, **caractérisé par le fait que** l'étape (b) de la carbonatation avec le CO₂ atmosphérique est réalisée sur une période comprise entre 5 et 15 jours.

8. Processus de traitement de l'eau usée selon la revendication 7, **caractérisé par le fait que** l'étape (b) de la carbonatation avec le CO₂ atmosphérique est réalisée sur une période comprise entre 10 et 12 jours.

9. Processus de traitement de l'eau usée selon une quelconque revendication précédente, **caractérisée par le fait qu'**il comprend en outre un système de collecte et de capture d'ammoniac pour l'ammoniac généré dans le processus en soi.
